# EUROPÄISCHE PATENTSCHRIFT

(11) **EP 0 362 864 B1**
(45) Veröffentlichungstag und Bekanntmachung des Hinweises auf die Patenterteilung: **03.08.1994**
(21) Anmeldenummer: 89118548.0
(22) Anmeldetag: 06.10.1989
(51) Int. Cl.: G02B 27/02

(54) **Leuchtscheibe für durchleuchtungsfähige Vorlagen, wie Dias und dgl.**
Illumination plate for transparencies such as slides and the like
Plaque lumineuse pour diapositives et dispositifs analogues

(30) Priorität: 06.10.1988 DE 8812561 U
(43) Veröffentlichungstag der Anmeldung: 11.04.1990
(73) Patentinhaber: Karl, Gerhard, Dipl.-Phys., D-97267 Himmelstadt (DE)
(72) Erfinder: Karl, Gerhard, Dipl.-Phys., D-97267 Himmelstadt (DE)
(74) Vertreter: Pöhner, Wilfried Anton, Dr.

(56) Entgegenhaltungen:
- DE-A- 3 223 706
- US-A- 4 052 120
- US-A- 4 528 617
- PATENT ABSTRACTS OF JAPAN, Band 8, Nr. 265 (P-318)[1702], 5. Dezember 1984 & JP-A-59 133 504

## Beschreibung

Die Erfindung bezieht sich auf eine Leuchtscheibe für durchleuchtungsfähige Vorlagen, wie Röntgenfilme, Dias und dgl. Dabei wird mit einer von unten beleuchteten Streuscheibe eine Vorlage durchleuchtet. Es kommt dabei darauf an, eine möglichst große, gut ausgeleuchtete Leuchtfläche zu erlangen.

Aus dem Dokument DE-A-32 23 706 ist eine Leuchtscheibe gemäß dem Oberbegriff des Anspruch 1 bekannt. Dort wird das Licht durch Lichtquellen mit Kondensoroptik in die Scheibe fokussiert. Mit dem gebündelten Licht kann man große Strecken in der durchsichtigen Platte überwinden, so daß man große Leuchtflächen erzeugen kann.
Dabei wird das gebündelte Licht durch Totalreflexion in der Scheibe weitergeleitet, bis es an einen Störpunkt auf der Oberfläche der Scheibe gelangt, an dem die Totalreflexion gestört und dort das Licht diffus gestreut wird.

Dabei kommt es aber durch das gebündelte Licht, das an den Störpunkten auf der Oberfläche der planparallelen Platte gestreut wird zur streifenförmigen Lichtverteilung längs der Ausbreitung des Lichtbündels. Diese Helldunkelzonen sind in der Nähe der Lampen besonders stark. Erst in großer Entfernung zu den Lampen vermischen sich die kegelförmigen Lichtstreifen mehrerer Lampen, sodaßnach dem heutigen Stand der Technik nur etwa die Hälfte der Leuchtfläche effektiv gleichmäßig ausgeleuchtet ist.
Diese Streifen werden bei der Betrachtung von Dias und Filmen als störend empfunden. Insbesondere müssen diese Streifen bei der Röntgenfilmbetrachtung vermieden werden, um Fehldiagnosen zu vermeiden. Auch bei der Bearbeitung von grafischen Vorlagen kann es durch diese Streifen zu falscher Beurteilung kommen, so daß eine wertvolle Vorlage falsch bearbeitet wird. Durch den Einsatz von vielen Lichtquellen, die dicht nebeneinander gesetzt werden, kann die Streifenbildung verringert werden. Es kommt dann jedoch zur Überhitzung der Lichtquelllenhalterung. Außerdem werden gerade beim Einsatz von vielen teuren Halogenlampen die Kosten der Leuchtscheibe sehr stark erhöht.
Um diese störende Streifenbildung auf preisgünstige Weise zu vermeiden, wird erfindungs gemäß die Eintrittsseite der planparallelen Platte gemäß dem kennzeichnenden Teil des Anspruchs 1 mit einem Lichtaufstreuer versehen, dessen Struktur kleiner als der Durchmesser des gebündelten Lichtes ist und dessen Strukturen senkrecht zur Scheibenebene verlaufen.
Auf diese Weise wird das Licht in der Scheibenebene diffus gestreut, jedoch die Bündelung senkrecht zur Scheibenebene bleibt erhalten. Die Reichweite des Lichts in der Scheibe wird somit nicht verringert. Die dunklen Stellen zwischen den einzelnen Lampen werden verhindert. Dabei ist es notwendig, daß die Strukturen des Aufstreuers kleiner dimensioniert sind als das der Durchmesser des Lichtbündels.

So wird das Licht nicht wie bei einer prismatischen Brechung an einer Fläche in eine Richtung abgelenkt, sondern in alle Richtungen innerhalb der Plattenebene gestreut.

Der Lichtaufstreuer läßt sich aus reflektierenden Lamellen als opaques Strichraster oder als zylinderförmiges optisches Raster als Teil der planparallelen Platte selbst ausbilden. Vorteilhaft ist auch die Ausbildung des Lichtaufstreuers als separates Teil, das preisgünstig aus Durchsichtigem Kunststoff hergestellt werden kann und zwischen den Lichtquellen und die planparallelen Platte gefügt wird.
Um die von der Lampe kommenden Wärmestrahlung gut abzuführen, wird der Lichtverteiler vorteilhafterweise in Aluminium gefaßt, über das die Wärme gut abgeleitet und abgestrahlt wird.
Vorteilhafterweise wird die Aluminiumfassung gleichzeitig als Reflektor ausgebildet.

In einer weiterführenden Ausführung wird zwischen die planparallele Platte und den Aufstreuer ein Colorfilter eingefügt. So wird die Platte gleichmäßig farbig ausgeleuchtet. Anstelle der Lampen mit Kondensorlinsen kann auch ein Lichtleiter eingesetzt werden, mit dem eine Erwärmung des Lampensystems vermieden wird.

In den nachfolgenden Zeichnungen wird die Erfindung anhand von lediglich einer Ausführungsform näher erläutert.

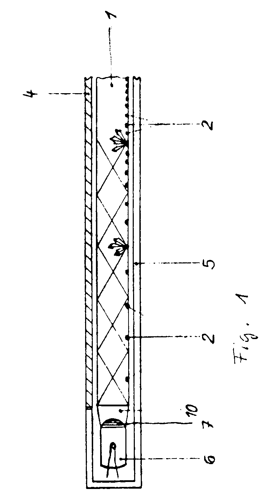

In Fig. 1 wird der prinzipielle Aufbau einer Leuchtscheibe gezeigt.

Fig. 2 zeigt in der Aufsicht anhand eines Beispiels wie die kegelförmigen Lichtstreifen auf der Oberfläche der Scheibe zu sehen sind.

In der Fig. 3 wird die Funktion des Lichtverteilers an einen Beispiel erläutert.

Fig. 4 zeigt die beispielhafte Ausführung eines separaten Aufstreuers mit Aluminiumfassung.

Im Rahmen (5) liegt die planparallele durchsichtige Platte (1) die auf einer Seite mit Störpunkten (2) versehen ist Je weiter diese Störpunkte (2) von der Lampe (6,7) entfernt sind, um so höher ist deren Dichteverteilung. Von der Lampe (6) mit dem Kondensor (7) wird das Licht in die planparallele Scheibe (1) gebündelt, (Lichtbündel (10)). In dieser Scheibe (1) wird das Licht durch Totalreflexion weitergeleitet, bis es auf einen Störpunkt (2) trifft und dort in alle Richtungen gestreut wird.

Damit die einzelnen Störpunkte (2) nicht zu sehen sind, wird das Licht durch eine Streuscheibe (4) betrachtet, auf der dann die Vorlage gelegt wird.

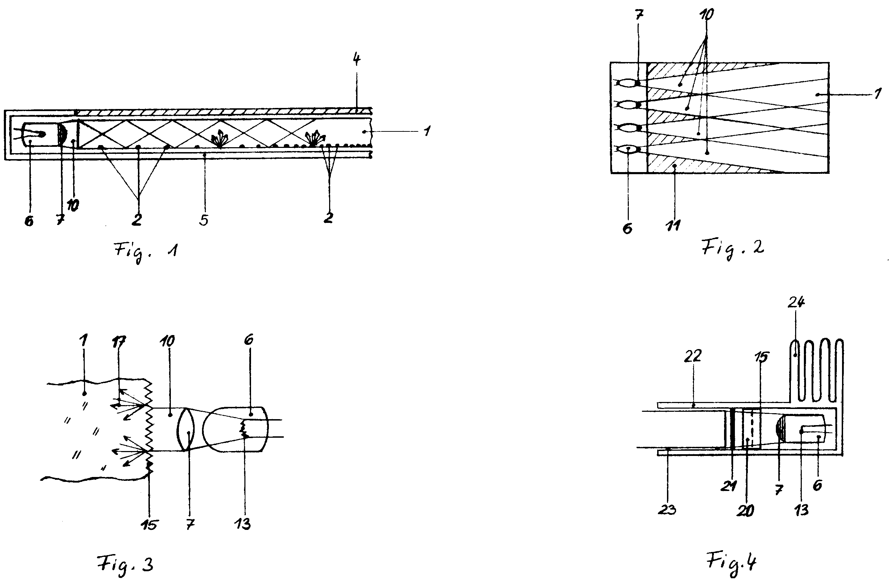

Schaut man senkrecht auf die Leuchtscheibe, so erkennt man wie in Fig. 2 gezeigt, die kegelförmige Ausbreitung des Lichts in der durchsichtigen Scheibe(1). Im Bereich der Lichtkegel (10) der Lampen (6) wird mehr Licht an den Störpunkten (2) aus der Scheibe (1) gestreut, als außerhalb der Lichtkegel, so daß es dort zur Schattenbildung (11) kommt. Je nach Lampenanzahl verändern sich die Abstände zwischen den Lichtkegeln und damit auch die Schattenbildungen.

Ziel der Erfindung ist es nun, auf preisgünstige Weise die Streifenbildung zu vermeiden, was anhand der Abbildung 3 erläutert wird, bei der man in Aufsicht auf die Scheibe schaut. Das von der Lichtquelle (6) kommende Licht wird über den sphärischen Kondensor (7) auf die Eintrittsfläche der planparallelen Platte gelenkt. Dort wird es durch den Aufstreuer (15) (z.B. kleine Prismen senkrecht zur Plattenebene) in der Scheibenebene abgelenkt. Senkrecht zur Plattenebene wird das Licht ohne Einfluß durch den Aufstreuer (15) in die Scheibe (1) gebrochen. In der Scheibenebene jedoch ist der Lichtkegel sehr weit aufgefächert, so daß praktisch keine dunklen Zonen (10) auftreten können.

Fig. 4 zeigt dem beispielhaften Aufbau der Leuchtscheibe mit separatem Aufstreuer (20), Colorfilter (21) und wärmeleitender Aluminiumfassung (22), die innen als Reflektor (23) ausgebildet ist und mit Kühlrippen (24) versehen ist.

## Patentansprüche

1. Leuchtscheibeneinrichtung mit einer Lichtquelle (6), einer durchsichtigen planparallelen Scheibe (1) und einer Streuscheibe (4), die an oder in der Nähe einer der beiden parallelen Flächen der planparallelen Scheibe (1) angeordnet ist, wobei die Lichtquelle (6) bezüglich der planparallelen Scheibe (1) so angeordnet ist, daß Licht von der Lichtquelle (6) an einer Stirnseite in die planparallele Scheibe (1) gesandt wird und in der planparallelen Scheibe (1) durch Totalreflexion geleitet wird, wobei die planparallele Scheibe (1) Störpunkte (2) enthält, welche die Totalreflexion aufheben, so daß Licht aus der planparallelen Scheibe (1) herausgestreut wird und die Streuscheibe (4) erreicht und wobei die Störpunktdichte mit der Entfernung zur Lichtquelle ansteigt,
**gekennzeichnet durch** einen Lichtstreuer (15), der vor der Stirnseite im von der Lichtquelle (6) kommenden gebündelten Licht (8) angeordnet ist und eine Lichteinfallfläche aufweist, die sich senkrecht zu den planparallelen Flächen der planparallelen Scheibe (1) erstreckt, wobei das Licht durch den Lichtstreuer (15) nur in der Ebene der planparallelen Scheibe (1) gestreut wird und wobei die Breite des von der Lichtquelle (6) kommenden Lichtbündels (8) größer als die einer streuenden Einzelstruktur des Lichtstreuers (15) ist.

2. Leuchtscheibeneinrichtung nach Anspruch 1, dadurch gekennzeichnet, daß die Lampenwendel der Lichtquelle parallel zur Plattenebene liegt und die Wendellänge größer als die Länge einer streuenden Einzelstruktur des Lichtstreuers ist.

3. Leuchtscheibeneinrichtung nach den Ansprüchen 1 - 2, dadurch gekennzeichnet, daß der Lichtstreuer (15) aus reflektierenden Lamellen aufgebaut ist.

4. Leuchtscheibeneinrichtung nach den Ansprüchen 1 - 2, dadurch gekennzeichnet, daß der Lichtstreuer (15) als Strichraster aus teildurchlässigem Material ausgeführt ist.

5. Leuchtscheibeneinrichtung nach den Ansprüchen 1 - 2, dadurch gekennzeichnet, daß der Lichtstreuer (15) als zylinderförmiges Linsenraster ausgebildet ist.

6. Leuchtscheibeneinrichtung nach einem der Ansprüche 1 - 5, dadurch gekennzeichnet, daß der Lichtstreuer (15) für mehrere Lampen (6) aus einem Stück durchsichtigem Kunststoff gefertigt ist.

7. Leuchtscheibeneinrichtung nach einem der Ansprüche 1 - 6, dadurch gekennzeichnet, daß zwischen dem Lichtstreuer (15) und der planparallelen Scheibe (1) ein Colorfilter eingebracht ist.

8. Leuchtscheibeneinrichtung nach einem der Ansprüche 1 - 7, dadurch gekennzeichnet, daß der Lichtstreuer (15) in ein Aluminiumgehäuse eingebaut ist, das die von der Lichtquelle kommende Wärme im Bereich des Lichtstreuers aufnimmt.

9. Leuchtscheibeneinrichtung nach einem der Ansprüche 1 - 8, dadurch gekennzeichnet, daß das Licht von der Lichtquelle (6) durch Lichtleiter zum Lichtstreuer (15) geleitet wird.

10. Leuchtscheibeneinrichtung nach einem der Ansprüche 1 - 9, dadurch gekennzeichnet, daß die planparallele Scheibe (1) am Lichteintritt beidseitig mit Reflektoren versehen ist.

## Claims

1. Light disk device having a light source (6), a transparent plane-parallel disk (1), and a diffusion disk (4) which is arranged at or close to one of the two parallel surfaces of plane-parallel disk (1), and light source (6) is arranged in such a way in relation to the plane-parallel disk that light from light source (6) is sent into the plane-parallel disk (1) at one end and passed on in the plane-parallel disk (1) by means of total reflection, and plane-parallel disk (1) contains interference points (2) which neutralize total reflection, so that light is scattered out of the plane-parallel disk (1) and reaches diffusion disk (4), and the density of the interference points increases with distance to the light source,
**wherein** a light diffuser (15) is disposed before the end in the focused light (8) which comes from said light source (6), said light diffuser having a surface of incidence which extends perpendicular to the plane-parallel surfaces of said plane-parallel disk (1), and the light is only scattered in the plane of the plane-parallel disk (1) by said light diffuser (15), and the breadth of said light beam (8) coming from said light source (6) is greater than the breadth of a single diffusing structure of said light diffuser (15).

2. Light disk device according to claim 1, wherein the lamp filament of said light source lies parallel to the plate plane and the length of the filament is greater than the length of a single diffusing structure of said light diffuser.

3. Light disk device according to claims 1 - 2, wherein said light diffuser (15) is constructed of reflecting laminae.

4. Light disk device according to claims 1 - 2, wherein said light diffuser (15) is of semireflective material and bar pattern design.

5. Light disk device according to claims 1 - 2, wherein said light diffuser (15) is formed as a cylinder-shaped lenticular screen.

6. Light disk device according to one of claims 1 - 5, wherein said light diffuser (15) is made of one piece of transparent plastic for several lamps (6).

7. Light disk device according to one of claims 1 - 6, wherein a colour filter is inserted between said light diffuser (15) and said plane-parallel disk (1).

8. Light disk device according to one of claims 1 - 7, wherein said light diffuser (15) is installed in an aluminium housing, which, in the region of said light diffuser, absorbs the warmth coming from said light source.

9. Light disk device according to one of claims 1 - 8, wherein the light from said light source (6) is passed on to said light diffuser (15) by light guides.

10. Light disk device according to one of claims 1 - 9, wherein said plane-parallel disk (1) is provided with reflectors at both sides of the light entry.

## Revendications

1. Dispositif de plaque lumineuse comportant une source lumineuse (6), une plaque à faces planes (1) et un écran diffusant (4), qui est disposé contre l'une des deux faces parallèles de la plaque à faces planes (1), ou à son voisinage, la source lumineuse (6) étant disposée par rapport à la plaque à faces planes de telle sorte, que la lumière de la source lumineuse (6) est transmise par une face frontale dans la plaque à faces planes (1) et est guidée dans la plaque à faces planes (1) par réflexion totale, la plaque à faces planes (1) comportant des points d'obstacle (2), qui suppriment la réflexion totale, de sorte que la lumière est dispersée hors de la plaque à faces planes (1) et atteint l'écran diffusant (4), la densité des points d'obstacle (2) augmentant avec la distance par rapport à la source lumineuse,
**caractérisé par** un diffuseur de lumière (15), qui est disposé devant la face antérieure dans le faisceau de lumière (8) émis par la source lumineuse (6) et qui présente une surface d'entrée de la lumière s'étendant perpendiculairement aux surface de la plaque à faces planes (1), la lumière n'étant dispersée par le diffuseur de lumière (15) que dans le plan de la plaque à faces planes (1), et la largeur du faisceau lumineux (8) émis pas la source lumineuse (6) étant plus grande que celle d'un élément diffuseur individuel de structure du diffuseur (15).

2. Dispositif de plaque lumineuse selon la revendication 1, **caractérisé en ce que** le filament de la source lumineuse est parallèle au plan de la plaque et en ce que la longueur du filament est plus grande que la longueur d'un élément diffuseur individuel de structure du diffuseur.

3. Dispositif de plaque lumineuse selon les revendications 1 - 2, **caractérisé en ce que** le diffuseur de lumière (15) est constitué de lamelles réfléchissantes.

4. Dispositif de plaque lumineuse selon les revendications 1 - 2, **caractérisé en ce que** le diffuseur de lumière (15) est réalisé selon un réseau de lignes en matériau semi-translucide.

5. Dispositif de plaque lumineuse selon les revendications 1 - 2, **caractérisé en ce que** le diffuseur de lumière (15) est constitué en réseau de lentilles de forme cylindrique.

6. Dispositif de plaque lumineuse selon l'une des revendications 1 - 5, **caractérisé en ce que** le diffuseur de lumière (15) est réalisé pour plusieurs lampes (6) d'un bloc de matière plastique transparente.

7. Dispositif de plaque lumineuse selon l'une des revendications 1 - 6, **caractérisé en ce que** entre le diffuseur de lumière (15) et la plaque à faces parallèles (1) est disposé un filtre coloré.

8. Dispositif de plaque lumineuse selon l'une des revendications 1 - 7, **caractérisé en ce que** le diffuseur de lumière (15) est disposé dans un boîtier en aluminium, qui absorbe au niveau du diffuseur de lumière la chaleur émise par la source lumineuse.

9. Dispositif de plaque lumineuse selon l'une des revendications 1 - 8, **caractérisé en ce que** la lumière en provenance de la source lumineuse (6) est guidée par à travers un conduit lumineux jusqu'au diffuseur de lumière (15).

10. Dispositif de plaque lumineuse selon l'une des revendications 1 - 9, **caractérisé en ce que** la plaque à faces parallèles (1) est pourvue à l'entrée de la lumière des deux côtés de réflecteurs.
